# EUROPEAN PATENT APPLICATION

(11) **EP 4 851 611 A1**
(43) Date of publication of application: **09.12.2026**
(21) Application number: 25787075.8
(22) Date of filing: 03.04.2025
(51) Int. Cl.: G01N 21/88, G01B 11/26, G01B 11/02, H01M 10/42

(54) **DEVICE AND METHOD FOR INSPECTING ELECTRODE STACK**

(30) Priority: 08.04.2024 KR 20240047641
(71) Applicant: LG Energy Solution, Ltd., Seoul 07335 (KR)
(72) Inventor: NOH, Chang Woo, Daejeon 34122 (KR); KIM, Yong Nam, Daejeon 34122 (KR); LEE, Yong Jun, Daejeon 34122 (KR); HA, Heonwook, Daejeon 34122 (KR); LEE, Changseok, Daejeon 34122 (KR)
(74) Representative: Plasseraud IP
(86) International application number: PCT/KR2025/004502
(87) International publication number: WO 2025/216483

(57) **Abstract**

The present invention provides an inspection apparatus and an inspection method capable of inspecting misalignment of electrode tabs without detection errors caused by diffused reflection by capturing an electrode laminate under backlight and forward light. The inspection apparatus includes: a first light irradiating a light of a first wavelength to a first thicknesswise end of the electrode laminate; a second light irradiating a light of a second wavelength different from the first wavelength to a second thicknesswise end of the electrode laminate; and a camera detecting the light of the first wavelength and the light of the second wavelength, and capturing a image of the electrode laminate from the second thicknesswise end.

## Description

### [TECHNICAL FIELD]

This application claims the benefit of priority based on Korean Patent Application No. 10-2024-0047641 filed on April 8, 2024, entire content disclosed in the document of the patent applications is included as a part of this specification.

The present invention relates to an inspection apparatus for inspecting whether an electrode laminate is defective and an inspection method using the same. Specifically, the present invention relates to an inspection apparatus and method for inspecting whether tabs of an electrode laminate are aligned.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module or battery pack in which multiple battery cells are electrically connected is used.

Meanwhile, as a type of unit secondary battery cell, cylindrical, prismatic and pouch-type battery cells are known. Since it is desirable to manufacture medium-to-large-sized battery modules as small and light as possible, prismatic batteries and pouch-type batteries that may be stacked with a high degree of integration and have a small weight per capacity are mainly used as battery cells for medium-to-large-sized battery modules.

Among these, pouch-type battery cells have various structures depending on the method of manufacturing the electrode assembly accommodated therein. In particular, recently, high-capacity electrode laminate are often manufactured at a high speed using the zigzag stacking method, which alternately stacks anodes and cathodes between each layer of a separator folded in a zigzag pattern.

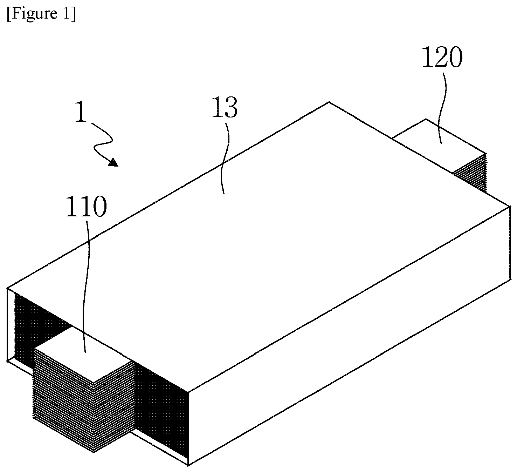

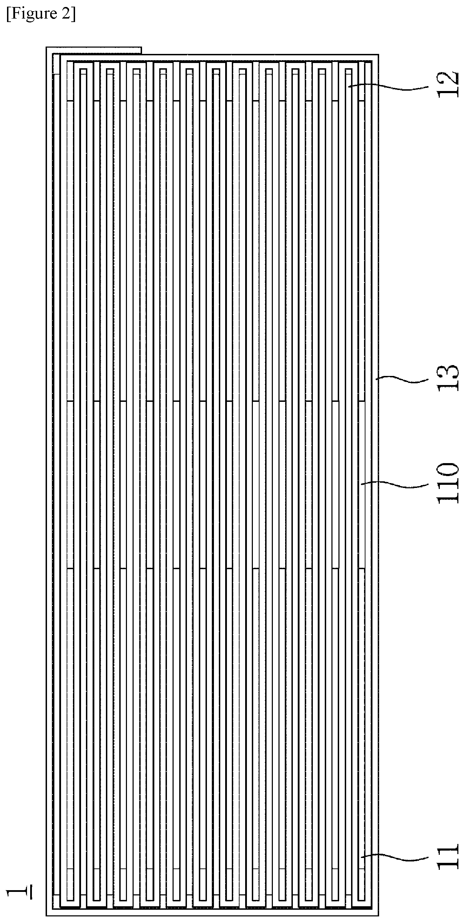

FIG. 1 illustrates an electrode laminate manufactured by zigzag stacking, and FIG. 2 is a front view of the electrode laminate of FIG. 1. Referring to FIGS. 1 and 2, an electrode laminate 1 manufactured by the zigzag stacking method has a structure in which a plurality of electrodes 11 and 12 are interposed and laminated between each layer of a separator 13 folded in a zigzag manner. Here, the plurality of electrodes 11 and 12 have a plurality of electrode tabs 110 and 120 protruding from one side thereof, respectively.

The plurality of electrode tabs 110 and 120 are aligned along the thicknesswise direction, and stacked to be connected to an electrode lead serving as a terminal of a battery cell. Here, it is necessary that the plurality of electrode tabs 110 and 120 are accurately aligned along the thicknesswise direction. Therefore, it is common for the production line of such electrode laminate 1 to be equipped with an inspection apparatus for inspecting the alignment of the plurality of electrode tabs 110 and 120.

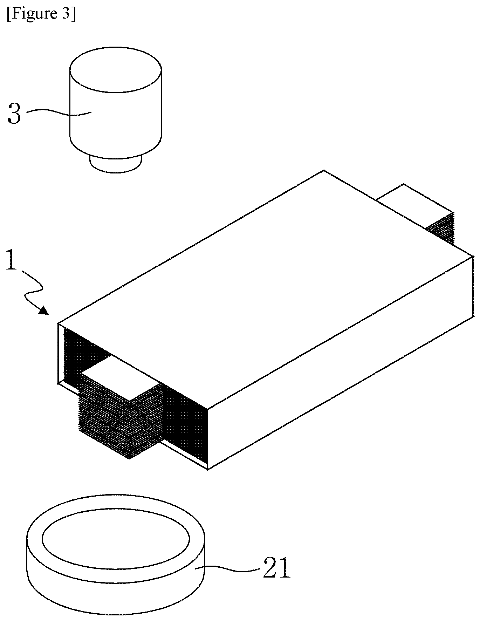

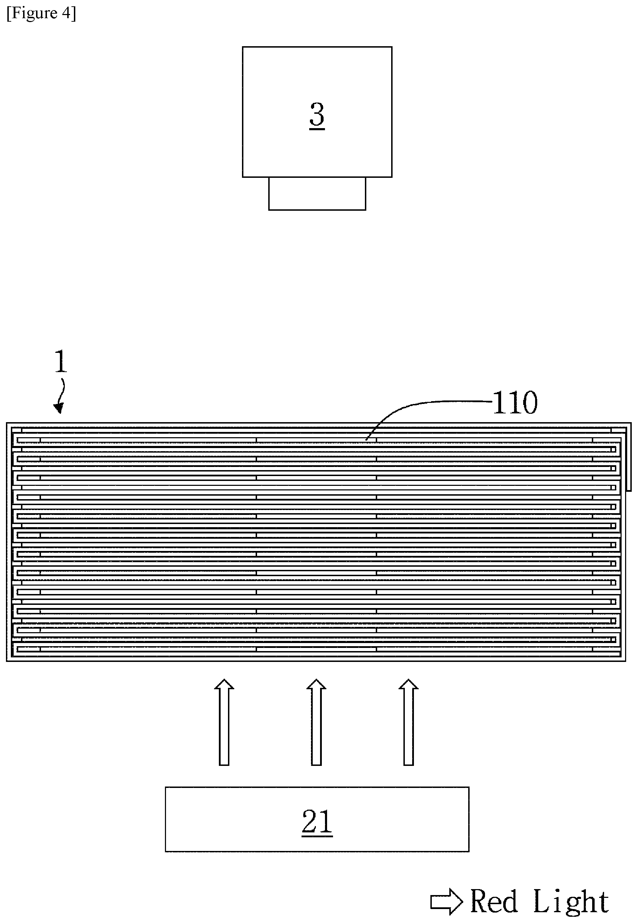

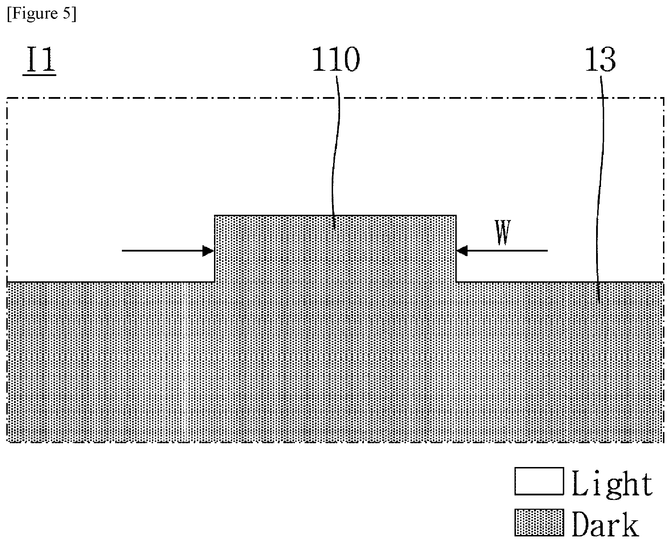

FIGS. 3 and 4 illustrate an inspection apparatus for inspecting the electrode laminate of FIG. 1, and FIG. 5 illustrates a image of an electrode laminate. Referring to FIGS. 3 to 5, in order to inspect the alignment of the electrode tabs 110, the width W of the stacked electrode tabs 110 when viewed in the thicknesswise direction may be measured. That is, when the width W is excessively larger than the width of each of the electrode tabs 110, it may be determined that the stacked electrode tabs 110 are not accurately aligned with each other.

Here, it is advantageous to capture the area around the electrode tab 110 in image with a backlight in order to measure the width W. In the image I1 acquired by capturing the stacked electrode tabs 110 with a backlight, the silhouette of the stacked electrode tabs 110 are determined as a whole. Therefore, the inspection apparatus for such inspection includes a camera 3 and a light 21 facing each other in the thicknesswise direction with the plurality of electrode tabs 110 interposed therebetween.

However, in case of such backlight photography, although backlight photography is advantageous for detecting the silhouette, it was observed that a detection error due to diffused reflection occurs when there is a deformation such as sagging in the electrode tab 110 of a highly reflective metal material.

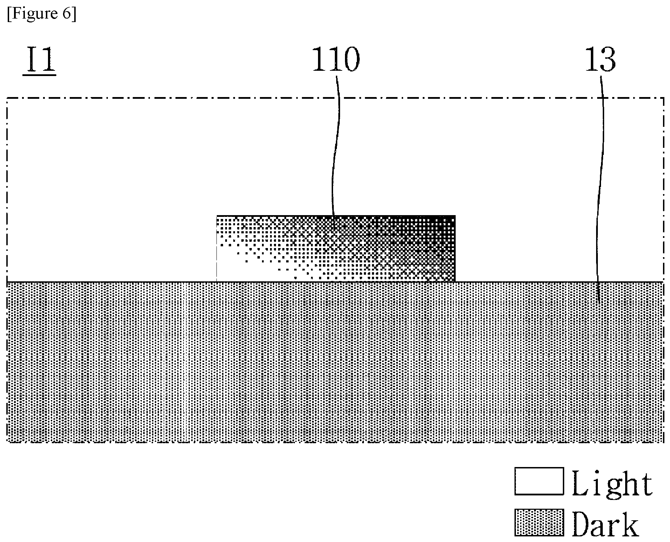

FIG. 6 illustrates a image of an electrode laminate wherein a diffused reflection occurred. Referring to FIG. 6, it was confirmed that some of the light irradiated from below is diffusely reflected upward such that the portion of the electrode tab 110 that should originally be photographed as a dark shadow is photographed brightly or the silhouette thereof cannot be detected when sag occurs due to gravity, etc. in one of the plurality of electrode tabs 110, especially the uppermost electrode tab 110.

When diffused reflection occurs as described above, the alignment inspection of the plurality of electrode tabs 110 becomes impossible as the width W becomes undetectable, and when the plurality of electrode tabs 110 is determined as defective, an over-detection problem occurs in which the defect rate becomes excessively high. Therefore, a solution to the problem of defect detection or over-detection due to such diffused reflection is urgently needed.

### [DISCLOSURE]

### [TECHNICAL PROBLEM]

In order to solve above-described problems of prior art, it is an object of the present invention to provide an inspection apparatus and an inspection method capable of preventing the inability to detect or over-detect misalignment of electrode tabs due to diffused reflection.

It is also an object of the present invention to provide an inspection apparatus and an inspection method capable of detecting defects such as damage to a separator along with misalignment of an electrode tab.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides an inspection apparatus for visually inspecting an electrode laminate where a plurality of electrodes are laminated along with a separator.

Here, the plurality of electrodes has a plurality of electrode tabs, respectively, protruding from one end thereof and arranged in thicknesswise direction. The inspection apparatus according to the present invention is for inspecting whether there is a defect in the electrode laminate including the alignment of the plurality of electrode tabs.

The inspection apparatus includes: a first light irradiating a light of a first wavelength to a first thicknesswise end of the electrode laminate; a second light irradiating a light of a second wavelength different from the first wavelength to a second thicknesswise end of the electrode laminate; and a camera detecting the light of the first wavelength and the light of the second wavelength, and capturing a image of the electrode laminate from the second thicknesswise end.

Here, the first thicknesswise end and the second thicknesswise end of the electrode laminate are opposite ends. Specifically, the first thicknesswise end and the second thicknesswise end according to an embodiment may refer to the upper and lower ends of the electrode laminate, respectively.

That is, the inspection apparatus according to the present invention is capable of capturing the electrode laminate with a backlight or a front light. Here, the image abnormally captured with the backlight caused by diffused reflection may not detect the width of the electrode tab or may cause a problem of over-detection of defects. However, it is advantageous that the width of the electrode tab may be detected more accurately when captured normally. Meanwhile, the image captured with the front light is advantageous in that the width detection is relatively inaccurate. However, there is no possibility of abnormal capturing caused by diffused reflection. The inspection apparatus according to the present invention may take advantage of all of the advantages by simultaneously performing backlight shooting and front light shooting as described above.

According to an embodiment of the present invention, the inspection apparatus may further include may further include a image processing device that processes the image acquired by the camera to extract the first image having the component of the light of the first wavelength and the second image having the component of the light of the second wavelength. That is, the camera may simultaneously detect the light of the first wavelength and the light of the second wavelength to acquire a single combined image, and the image processing device may process the combined image to separate and extract the first image having the component of the light of the first wavelength and the second image having the component of the light of the second wavelength. In other words, the first image and the second image may be separately extracted by software from the single combined image captured by the camera.

According to a modified example, the camera includes a first sensor detecting the light of the first wavelength and a second sensor detecting the light of the second wavelength, and the image may include a first image acquired from the first sensor and the second image acquired from the second sensor. That is, the first image and the second image may be detected by different sensors and acquired separately from the beginning. In other words, the first image and the second image may be acquired through different hardware paths from the beginning.

The light of the first wavelength and the light of the second wavelength may be visible lights of different colors selected from red, green and blue. That is, in order to separate the first image and the second image, it is convenient that the light of the first wavelength and the light of the second wavelength have different wavelengths among RGB. Specifically, according to an embodiment of the present invention, first one of the light of the first wavelength and the light of the second wavelength may be red light and second one thereof may be green light. For example, the light of the first wavelength may be red light and the light of the second wavelength may be green light.

The present invention also provides an inspection method for visually inspecting an electrode laminate where a plurality of electrodes are laminated along with a separator.

The plurality of electrodes has a plurality of electrode tabs, respectively, protruding from one end thereof and arranged in thicknesswise direction. The inspection apparatus according to the present invention is for inspecting whether there is a defect in the electrode laminate including the alignment of the plurality of electrode tabs.

The inspection method includes: an irradiating step of irradiating a light of a first wavelength to a first thicknesswise end of the electrode laminate 1 and a light of a second wavelength different from the first wavelength to a second thicknesswise end of the electrode laminate 1; a capturing step of capturing a image of the electrode laminate 1 from the second thicknesswise end with a camera 3 detecting the light of the first wavelength and the light of the second wavelength; a image acquisition step of acquiring a first image from the light of the first wavelength and a second image from the light of the second wavelength; and a determination step of analyzing the first image and the second image to determine whether the electrode laminate 1 may be defective.

Here, the first thicknesswise end and the second thicknesswise end of the electrode laminate are opposite ends. Specifically, the first thicknesswise end and the second thicknesswise end according to an embodiment may refer to the upper and lower ends of the electrode laminate, respectively.

According to an embodiment of the present invention, the image acquisition step may be performed by extracting the first image having a component of the light of the first wavelength and the second image having a component of the light of the second wavelength by processing the image captured by the camera. That is, in the capturing step, the camera may simultaneously detect the light of the first wavelength and the light of the second wavelength to acquire a single combined image, and in the image acquisition step, the image processing device may process combined image to separate and extract the first image having the component of the light of the first wavelength and the second image having the component of the light of the second wavelength. In other words, the first image and the second image may be separately extracted by software from the single combined image captured by the camera.

According to a modified example, the camera includes a first sensor detecting the light of the first wavelength and a second sensor detecting the light of the second wavelength, and the image acquisition step may be performed by acquiring the first image from the first sensor and the second image from the second sensor. That is, the first image and the second image may be detected by different sensors and acquired separately in the capturing step, and in such case, the capturing step may include the image acquisition step. In other words, the first image and the second image may be acquired through different hardware paths from the beginning.

The determination step may include tab defectiveness determination steps and for determining whether the plurality of electrode tabs are misaligned.

The tab defectiveness determination step may be performed by detecting a width of the plurality of electrode tabs in stacked state from at least one of the first image and the second image, and determining the plurality of electrode tabs as non-defective when the width is less than or equal to a predetermined value, and as defective when the width is greater than the predetermined value. This is because the width W is the same as that of each electrode tab when the plurality of electrode tabs are all aligned at the same position in the thicknesswise direction, and the worse the alignment of the plurality of electrode tabs, the larger the width.

The tab defectiveness determination steps and may include: a first determination step of analyzing the first image to determine whether the plurality of electrode tabs are misaligned; and a second determination step of analyzing the second image to determine whether the plurality of electrode tabs are misaligned. That is, in the first determination step, the width may be detected from the first image shot with the backlight, and in the second determination step, the width may be detected from the second image shot with the front light. By using two different means of detecting the width W together in such way, errors in the inspection results may be reduced.

According to an embodiment of the present invention, the second determination step may be performed after the first determination step under the condition that a product is determined as defective in the first determination step. When a detection error due to diffused reflection occurs in the first determination step, a product is likely to be falsely determined as defective. In such case, the second determination step may be performed after the first determination step. However, when a detection error due to diffused reflection does not occur, it is not necessary that the second determination step is performed as the width W detected from the first image is more accurate than the second image. Therefore, it is sufficient that the second determination step is performed when a product is determined as defective in the first determination step, which is more economical and efficient.

However, in contrast, the effect of the present invention may also be exerted the first determination step is performed after the second determination step under the condition that a product is determined as defective in the second determination step.

According to a modified example, the tab defectiveness determination steps and may further include a third determination step of finally determining the plurality of electrode tabs as non-defective when the plurality of electrode tabs are determined as non-defective in at least one of the first determination step and the second determination step. In such case, the highest accuracy may be achieved by always performing both the first determination step and the second determination step.

The determination step may further include a separator defectiveness determination step of analyzing the second image to determine whether the electrode laminate is defective caused by damage to the separator. Since the electrode laminate is captured not only with a backlight but also with a front light according to the inspection method, a defect due to surface damage that appears on the exterior may also be detected.

In such case, the separator defectiveness determination step may be performed together with the second determination step.

### [ADVANTAGEOUS EFFECTS]

The present invention provides an inspection apparatus and an inspection method capable of detecting misalignment of electrode tabs without error even when diffused reflection occurs on the electrode tab by performing backlight and front light photography together.

In addition, according to the present invention, an inspection apparatus and an inspection method are provided capable of detecting defects due to surface damage such as separator damage along with misalignment of tabs by performing backlight photography and front light photography together.

The inspection apparatus and inspection method according to an embodiment of the present invention are advantageous in that the backlight and front light images may be efficiently and economically separated and extracted from a single combined image by software.

In addition, according to an embodiment of the present invention, an inspection method efficient and economical in terms of time and energy is provided by performing a defectiveness determination from the front light image only when the alignment of the electrode tabs is determined to be poor from the backlight image.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates an electrode laminate manufactured by zigzag stacking, and FIG. 2 is a front view of the electrode laminate of FIG. 1.
FIGS. 3 and 4 illustrate an inspection apparatus for inspecting the electrode laminate of FIG. 1.
FIG. 5 illustrates a image of an electrode laminate.
FIG. 6 illustrates a image of an electrode laminate wherein a diffused reflection occurred.
FIG. 7 illustrates an electrode laminate to be inspected according to an embodiment of the present invention, and FIG. 8 illustrates a front view of the electrode laminate of FIG. 7.
FIGS. 9 to 11 illustrate an inspection apparatus according to an embodiment of the present invention.
FIG. 12 is a flow chart illustrating an inspection method according to an embodiment of the present invention.
FIG. 13 illustrates a combined image captured by an inspection apparatus according to an embodiment of the present invention.
FIG. 14 is a schematic diagram illustrating a process of obtaining a first image and a second image by processing the combined image of FIG. 13 by a image processing device according to an embodiment of the present invention.
FIG. 15 illustrates a first image according to an embodiment of the present invention, illustrating a image in which diffused reflection did not occur.
FIG. 16 is a first image according to an embodiment of the present invention wherein a diffused reflection occurred.
FIG. 17 is a second image according to an embodiment of the present invention.

### [DESCRIPTION OF REFERENCE NUMERALS]

1: electrode laminate
   11: (first) electrode
      110: (first) electrode tab
   12: second electrode
      120: second electrode tab
   13: separator
21: (first) light
22: second light
3: camera
4: image processing device
I0: combined image
I1: (first) image
I2: second image
W: width

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, preferred embodiments of the present invention will be described with reference to the accompanying drawings.

### [STRUCTURE OF ELECTRODE LAMINATE]

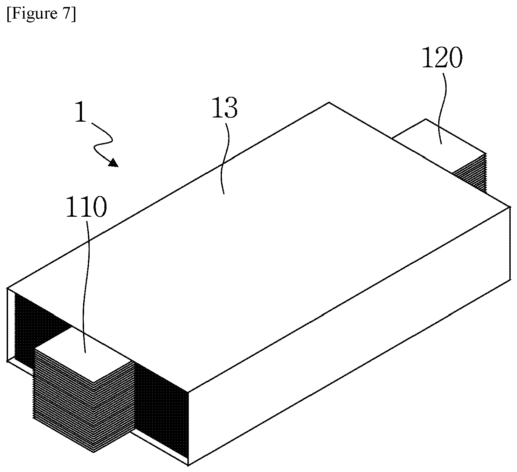

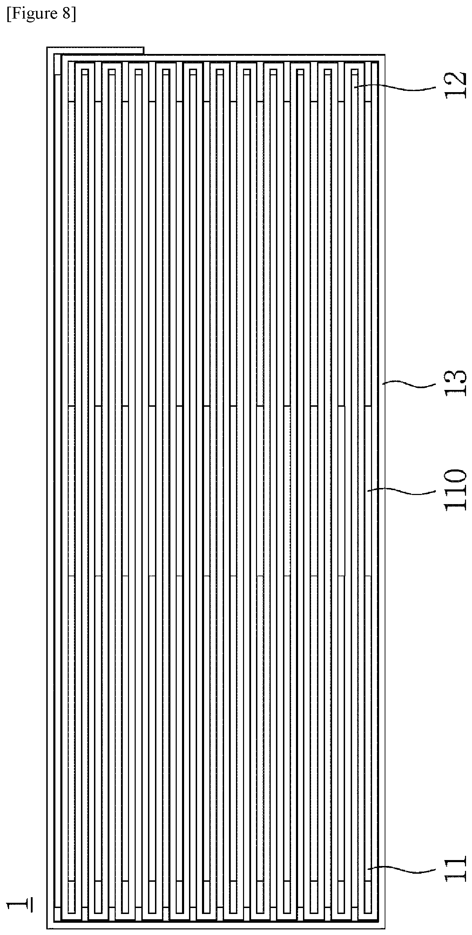

Hereinafter, with reference to FIGS. 7 and 8, the structure of an electrode laminate that is an inspection target of an inspection apparatus and an inspection method according to an embodiment of the present invention will be briefly described. In the embodiment, an electrode laminate manufactured by a zigzag stacking method is exemplified. However, it should be understood through the following description that the inspection apparatus and inspection method according to the present invention may be any electrode laminate having a structure having a plurality of electrode tabs aligned in one direction, regardless of the manufacturing method or structures thereof.

FIG. 7 illustrates an electrode laminate to be inspected according to an embodiment of the present invention, and FIG. 8 illustrates a front view of the electrode laminate of FIG. 1. Referring to FIGS. 7 and 8, the electrode laminate 1 may be manufactured by laminating a separator 13, a first electrode 11 and a second electrode 12.

The first electrode 11 may be an anode or a cathode, and the second electrode 12 may be a cathode or an anode. That is, the first electrode 11 and the second electrode 12 may be one and the other of an anode and a cathode, respectively.

Each of the first electrode 11 and the second electrode 12 may include a metal foil made of aluminum or copper.

The first electrode 11 and the second electrode 12 may be alternately and repeatedly laminated in thicknesswise direction of the electrode laminate.

Each of the first electrode 11 and the second electrode 12 may have a first electrode tab 110 and a second electrode tab 120 protruding from two ends thereof, respectively. The first electrode tab 110 and the second electrode tab 120 are arranged in the thicknesswise direction, and preferably, may be aligned at the same position. Each of the first electrode tab 110 and the second electrode tab 120 may be stacked in the thicknesswise direction and connected to a first electrode lead and a second electrode lead, respectively, thereby serving as a terminal of the battery cell.

The separator 13 is interposed between the first electrode 11 and the second electrode 12 and may be folded in a zigzag manner. More specifically, the separator 13 has a sheet shape having first surfaces and second surfaces facing opposite directions, and may be folded alternately such that the first surface is in contact with the two sides of the first electrode 11 and the second surface is in contact with the two sides of the second electrode 12.

The separator 13 is laminated with the first electrode 11 and the second electrode 12, and after folding, it may be wrapped along the surface of the electrode laminate 1. The separator 13 may then wrap and finish the electrode laminate 1 by having the end thereof fused or adhered to itself.

### [INSPECTION APPARATUS]

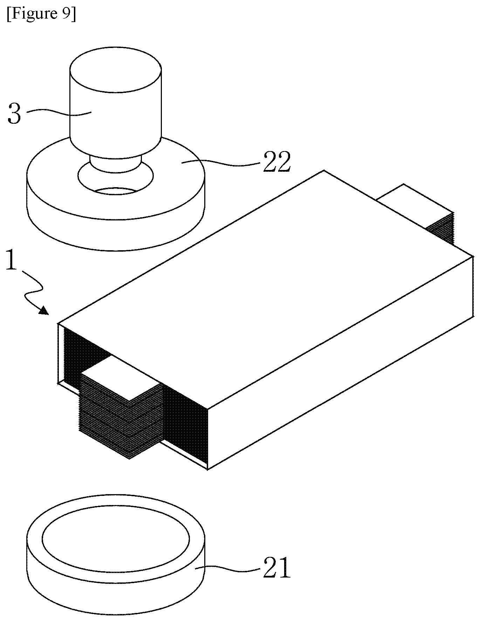

Hereinafter, with reference to FIGS. 9 to 11, the structure of an inspection apparatus according to an embodiment of the present invention will be described in detail. In the examples below, the electrode tab refers to the first electrode tab 110. However, it should be understood that the inspection apparatus described below may be equally used for alignment inspection of the second electrode tab 120.

FIGS. 9 to 11 illustrate an inspection apparatus according to an embodiment of the present invention. Referring to FIGS. 9 to 11, an inspection apparatus according to an embodiment of the present invention includes: a first light 21 that irradiates a light of a first wavelength to a first thicknesswise end of the electrode laminate 1; a second light 22 that irradiates a light of a second wavelength different from the first wavelength to a second thicknesswise end of the electrode laminate 1; and a camera 3 the light of the first wavelength and the light of the second wavelength, and capturing a image of the electrode laminate 1 from the second thicknesswise end.

Here, the first thicknesswise end and the second thicknesswise end of the electrode laminate 1 are opposite ends. Specifically, the first thicknesswise end and the second thicknesswise end according to an embodiment may refer to the upper and lower ends of the electrode laminate 1, respectively.

That is, the inspection apparatus according to the present invention is capable of capturing the electrode laminate 1 with a backlight or a front light. Here, the image abnormally captured with the backlight caused by diffused reflection may not detect the width of the electrode tab 110 or may cause a problem of over-detection of defects. However, it is advantageous that the width of the electrode tab 110 may be detected more accurately when captured normally. Meanwhile, the image captured with the front light is advantageous in that the width detection is relatively inaccurate. However, there is no possibility of abnormal capturing caused by diffused reflection. The inspection apparatus according to the present invention may take advantage of all of the advantages by simultaneously performing backlight shooting and front light shooting as described above.

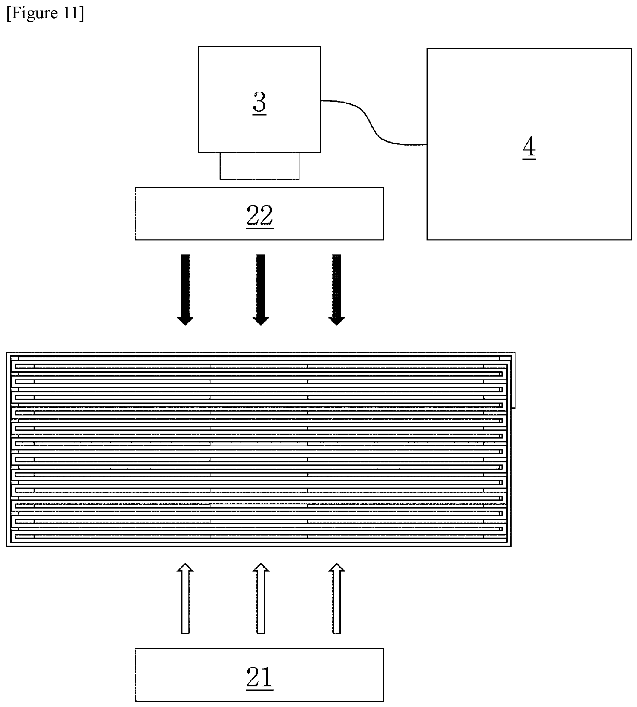

As shown in FIG. 11, the inspection apparatus according to an embodiment of the present invention may further include a image processing device 4 that processes the image acquired by the camera 3 to extract the first image having the component of the light of the first wavelength and the second image having the component of the light of the second wavelength. Here, the electrode laminate 1 captured with the backlight is the first image, and the electrode laminate 1 captured with the front light is the second image.

The image processing device 4 may be connected to the camera 3 to receive and process a image signal from the camera 3.

According to a modified example, the camera 3 may include a first sensor that detects the light of the first wavelength and a second sensor that detects the light of the second wavelength. In such case, the camera 3 may detect the light of the first wavelength through the first sensor to obtain the first image, and the light of the second wavelength through the second sensor to obtain the second image.

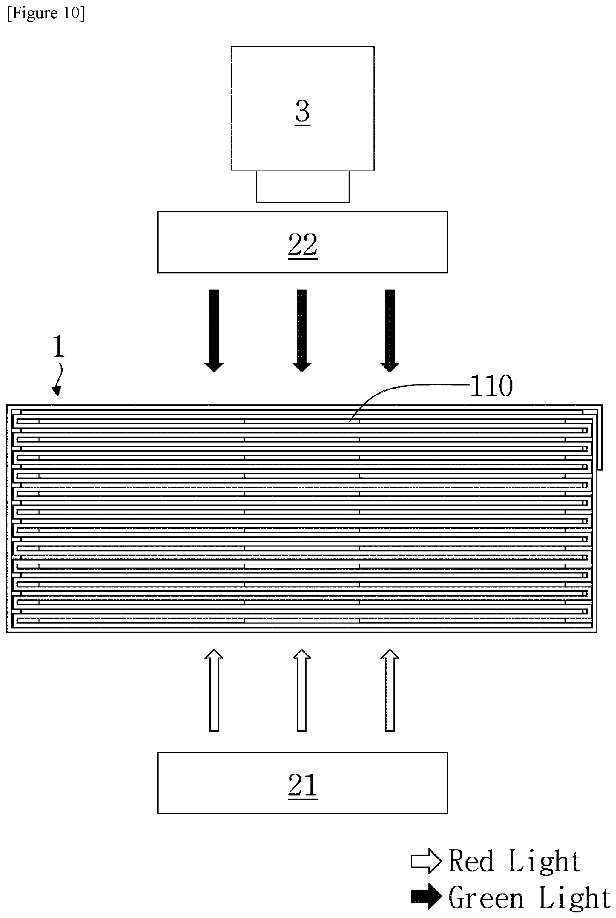

Referring back to FIG. 10, the light of the first wavelength and the light of the second wavelength may be visible lights of different colors selected from red, green and blue. That is, in order to separate the first image and the second image, it is convenient that the light of the first wavelength and the light of the second wavelength have different wavelengths among RGB. Specifically, according to an embodiment of the present invention, first one of the light of the first wavelength and the light of the second wavelength may be red light and second one thereof may be green light. For example, the light of the first wavelength may be red light and the light of the second wavelength may be green light.

### [INSPECTION METHOD]

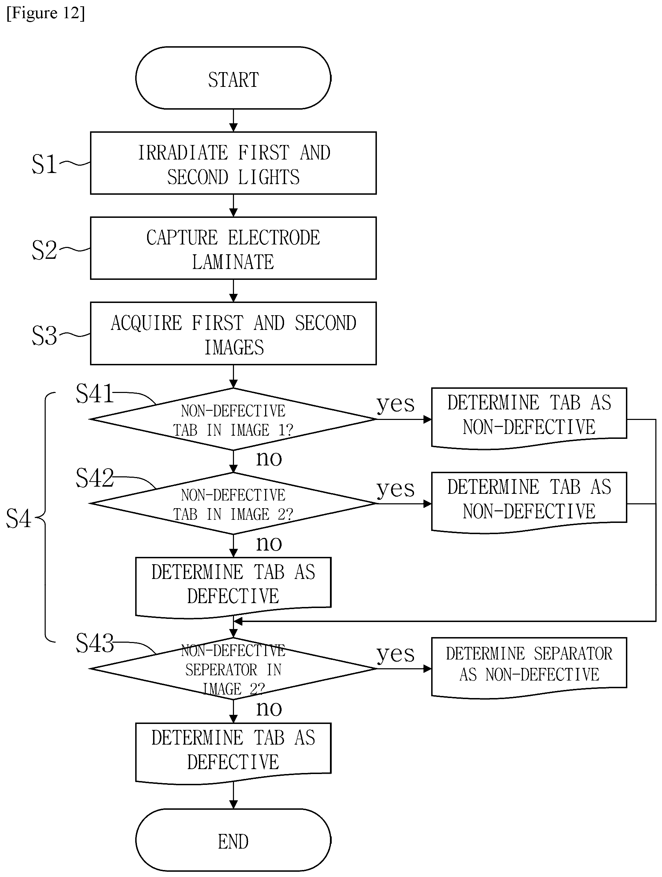

Hereinafter, with reference to FIGS. 12 to 17, an inspection method according to an embodiment of the present invention will be described in detail.

FIG. 12 is a flow chart illustrating an inspection method according to an embodiment of the present invention. Referring to FIG. 12, the inspection method according to an embodiment of the present invention includes: an irradiating step S1 of irradiating a light of a first wavelength to a first thicknesswise end of the electrode laminate 1 and a light of a second wavelength different from the first wavelength to a second thicknesswise end of the electrode laminate 1; a capturing step S2 of capturing a image of the electrode laminate 1 from the second thicknesswise end with a camera 3 detecting the light of the first wavelength and the light of the second wavelength; a image acquisition step of acquiring a first image I1 from the light of the first wavelength and a second image I2 from the light of the second wavelength; and a determination step of analyzing the first image I1 and the second image I2 to determine whether the electrode laminate 1 may be defective.

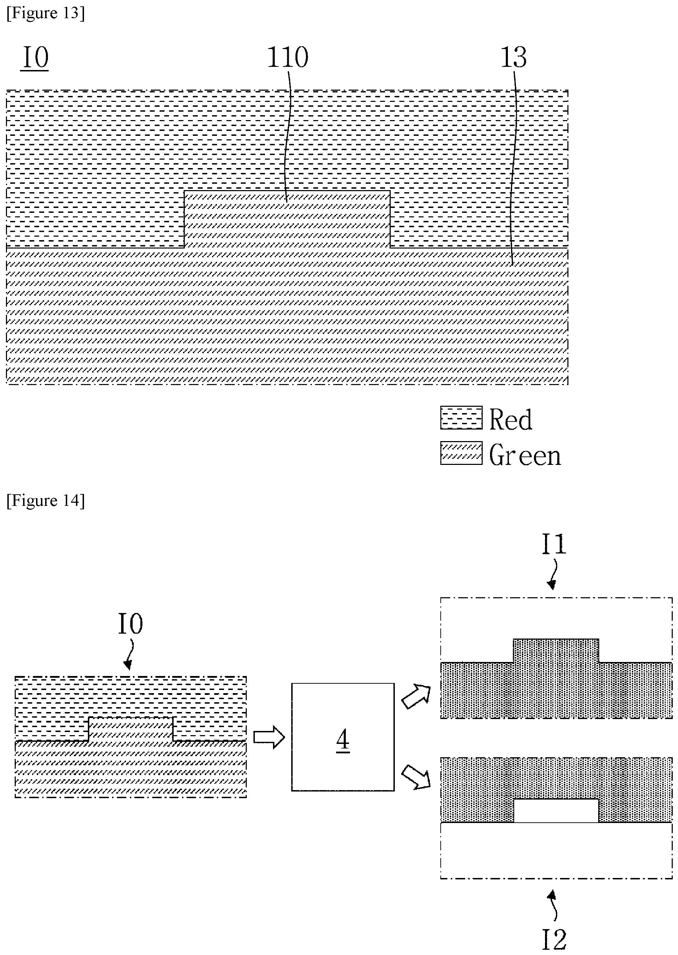

FIG. 13 illustrates a combined image captured by an inspection apparatus according to an embodiment of the present invention, and FIG. 14 is a schematic diagram illustrating a process of obtaining a first image and a second image by processing the combined image of FIG. 13 by a image processing device according to an embodiment of the present invention. Referring to FIGS. 13 and 14, according to an embodiment of the present invention, in the capturing step S2, the camera 3 may simultaneously detect the light of the first wavelength and the light of the second wavelength to acquire a single combined image I0.

Here, the image acquisition step S3 may be performed by extracting the first image I1 having a component of the light of the first wavelength and the second image I2 having a component of the light of the second wavelength by processing the combined image I0. That is, in the capturing step S2, the camera 3 may simultaneously detect the light of the first wavelength and the light of the second wavelength to acquire a single combined image I0, and in the image acquisition step S3, the image processing device 4 may process combined image I0 to separate and extract the first image I1 having the component of the light of the first wavelength and the second image I2 having the component of the light of the second wavelength. In other words, the first image I1 and the second image I2 may be separately extracted by software from the single combined image I0 captured by the camera 3.

According to a modified example, the camera 3 includes a first sensor detecting the light of the first wavelength and a second sensor detecting the light of the second wavelength, and the image acquisition step S3 may be performed by acquiring the first image I1 from the first sensor and the second image I2 from the second sensor. That is, the first image I1 and the second image I2 may be detected by different sensors and acquired separately in the capturing step S2, and in such case, the capturing step S2 may include the image acquisition step S3. In other words, the first image I1 and the second image I2 may be acquired through different hardware paths from the beginning.

Referring back to FIG. 12, the determination step S4 according to an embodiment of the present invention may include tab defectiveness determination steps S41 and S42 for determining whether the plurality of electrode tabs 110 are misaligned.

Here, the tab defectiveness determination steps S41 and S42 may include a first determination step S41 of analyzing the first image I1 to determine whether the plurality of electrode tabs 110 are misaligned.

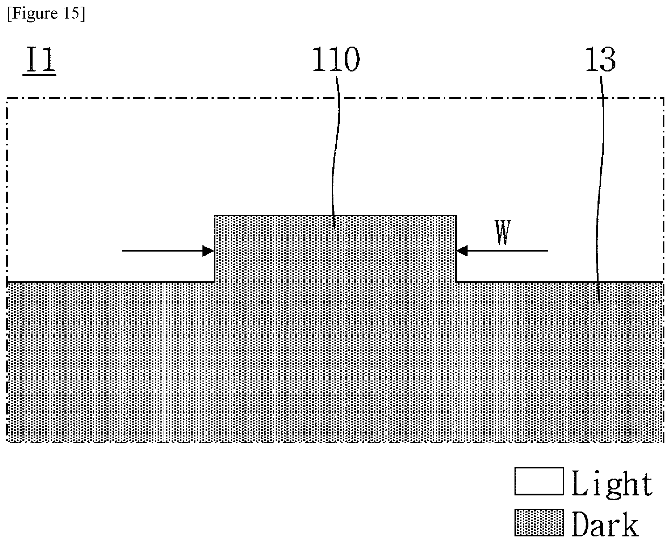

FIG. 15 illustrates a first image according to an embodiment of the present invention, illustrating a image in which diffused reflection did not occur. Referring to FIG. 15, the first determination step S41 may be performed by detecting the width W of the plurality of electrode tabs 110 in stacked state from the first image I1, and determining the plurality of electrode tabs 110 as non-defective when the width is less than or equal to a predetermined value, and as defective when the width is greater than the predetermined value. This is because the width W is the same as that of each electrode tab 110 when the plurality of electrode tabs 110 are all aligned at the same position in the thicknesswise direction, and the worse the alignment of the plurality of electrode tabs 110, the larger the width W. That is, when the plurality of electrode tabs 110 are not aligned and the positions thereof are misaligned, the width W is measured to be large in the first image I1 and/or the second image I2. Thus, when the width W exceeds a predetermined value, the plurality of electrode tabs 110 may be determined as defective.

Here, since the camera 3 faces a direction opposite to the irradiation direction of the first light 21, the first image I1 becomes a backlight-shot image. As a result, the first image I1 shows the overall silhouette of the stacked electrode tabs 110, and the silhouette of individual electrode tab 110 is not shown. That is, in the first image I1, the area where the electrode tab 110 is located is shown as a dark shadow, and the area adjacent to the electrode tab 110 is shown as bright. Accordingly, the detection of the width W in the first image I1 is facilitated.

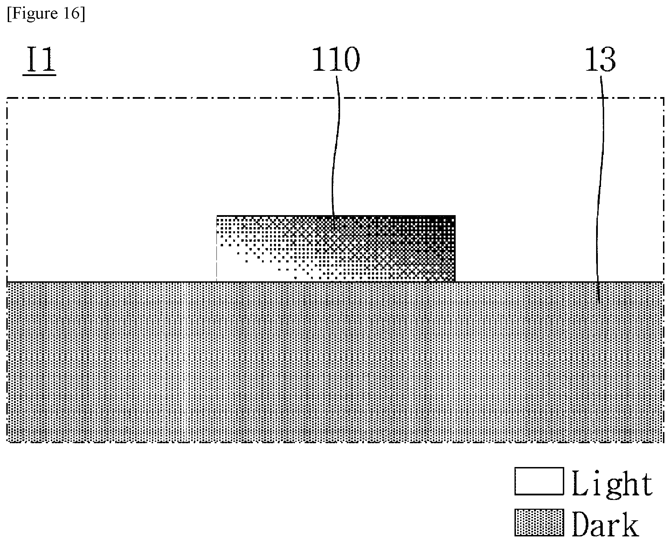

FIG. 16 is a first image according to an embodiment of the present invention wherein a diffused reflection occurred. Referring to FIG. 16, the light of the second wavelength may be diffusely reflected as the electrode tab 110 sags or deforms. Specifically, as the light from the first light 21 irradiated from below is diffusely reflected upward due to the sagging of the electrode tab 110, the area of the electrode tab 110, which should originally be expressed as a dark shadow, is expressed as bright such that the silhouette of the electrode tab 110 may not be accurately reflected in the first image I1. In such case, it is possible that the width W cannot be detected from the first image I1, or that the width W is detected incorrectly, resulting in a false determination even when there is no defect.

Referring back to FIG. 12, the tab defectiveness determination steps S41 and S42 may include a second determination step S42 of analyzing the second image I2 to determine whether the plurality of electrode tabs 110 are misaligned in order to solve the problem of defect not being detected or being over-detected in the first determination step S41.

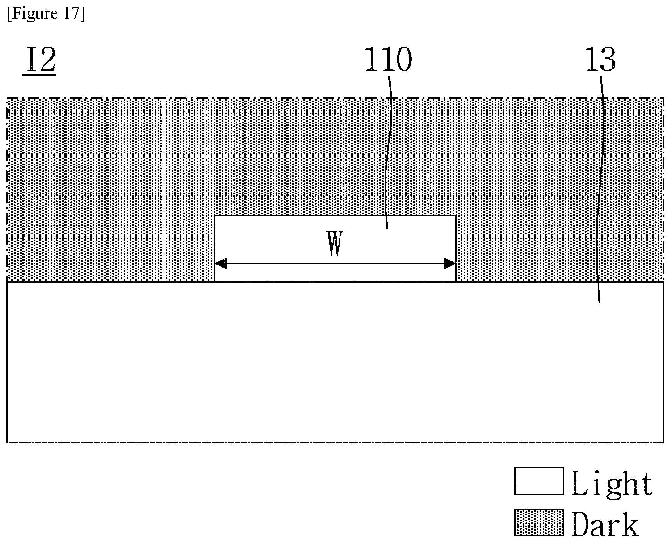

FIG. 17 is a second image according to an embodiment of the present invention. Referring to FIG. 17, the second determination step S42 may be performed by detecting the width W of the plurality of electrode tabs 110 in stacked state from the second image I2, and determining the plurality of electrode tabs 110 as non-defective when the width is less than or equal to the predetermined value, and as defective when the width is greater than the predetermined value.

Here, since the camera 3 faces the same direction as the irradiation direction of the second light 22, the second image I2 becomes a front light-shot image. As a result, the second image I2 shows the individual silhouette of the stacked electrode tabs 110. That is, in the second image I2, the area where the electrode tab 110 is located is shown as bright such that the surface shapes thereof may be identified, and the area adjacent to the electrode tab 110 is shown as dark shadows. Accordingly, in the second image I2, the failure of detection of the width of the electrode tab 110 caused by diffused reflection does not occur.

That is, in the first determination step S41, the width W may be detected from the first image I1 shot with the backlight, and in the second determination step S42, the width W may be detected from the second image I2 shot with the front light. By using two different means of detecting the width W together in such way, errors in the inspection results may be reduced.

Referring back to FIG. 12, according to an embodiment of the present invention, the second determination step S42 may be performed after the first determination step S41 under the condition that a product is determined as defective in the first determination step S41. When a detection error due to diffused reflection occurs in the first determination step S41, a product is likely to be falsely determined as defective. In such case, the second determination step S42 may be performed after the first determination step S41. However, when a detection error due to diffused reflection does not occur, it is not necessary that the second determination step S42 is performed as the width W detected from the first image I1 is more accurate than the second image I2. Therefore, it is sufficient that the second determination step S42 is performed when a product is determined as defective in the first determination step S41, which is more economical and efficient.

However, in contrast, the effect of the present invention may also be exerted the first determination step S41 is performed after the second determination step S42 under the condition that a product is determined as defective in the second determination step S42.

According to a modified example, the tab defectiveness determination steps S41 and S42 may further include a third determination step of finally determining the plurality of electrode tabs 110 as non-defective when the plurality of electrode tabs 110 are determined as non-defective in at least one of the first determination step S41 and the second determination step S42. In such case, regardless of the order in which the first determination step S41 and the second determination step S42 are performed, when a product is determined as non-defective in the first determination step S41 or in the second determination step S42, the electrode laminate 1 may be determined as non- defective without a tab defect.

Referring back to FIG. 12, the determination step S4 may further include a separator defectiveness determination step of analyzing the second image I2 to determine whether the electrode laminate 1 is defective caused by damage to the separator. Since the electrode laminate 1 is captured not only with a backlight but also with a front light according to the inspection method, a defect due to surface damage that appears on the exterior may also be detected.

In such case, the separator defectiveness determination step S43 may be performed together with the second determination step S42.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An inspection apparatus for visually inspecting an electrode laminate where a plurality of electrodes are laminated along with a separator, the plurality of electrodes having a plurality of electrode tabs, respectively, protruding from one end thereof and arranged in thicknesswise direction, the inspection apparatus comprising:
a first light irradiating a light of a first wavelength to a first thicknesswise end of the electrode laminate;
a second light irradiating a light of a second wavelength different from the first wavelength to a second thicknesswise end of the electrode laminate; and
a camera detecting the light of the first wavelength and the light of the second wavelength, and capturing a image of the electrode laminate from the second thicknesswise end.

2. The inspection apparatus of claim 1, further comprising: a image processing device processing a image acquired by the camera to extract a first image having a component of the light of the first wavelength and a second image having a component of the light of the second wavelength.

3. The inspection apparatus of claim 1, wherein the camera comprises a first sensor detecting the light of the first wavelength and a second sensor detecting the light of the second wavelength, and
the image comprises a first image acquired from the first sensor and a second image acquired from the second sensor.

4. The inspection apparatus of claim 1, wherein the light of the first wavelength and the light of the second wavelength are visible lights of different colors selected from red, green and blue.

5. The inspection apparatus of claim 4, wherein first one of the light of the first wavelength and the light of the second wavelength is red light and second one thereof is green light.

6. An inspection method of visually inspecting an electrode laminate where a plurality of electrodes are laminated along with a separator, the plurality of electrodes having a plurality of electrode tabs, respectively, protruding from one end thereof and arranged in thicknesswise direction, the inspection method comprising:
an irradiating step of irradiating a light of a first wavelength to a first thicknesswise end of the electrode laminate and a light of a second wavelength different from the first wavelength to a second thicknesswise end of the electrode laminate;
a capturing step of capturing a image of the electrode laminate from the second thicknesswise end with a camera detecting the light of the first wavelength and the light of the second wavelength;
a image acquisition step of acquiring a first image from the light of the first wavelength and a second image from the light of the second wavelength; and
a determination step of analyzing the first image and the second image to determine whether the electrode laminate is defective.

7. The inspection method of claim 6, wherein the image acquisition step is performed by extracting the first image having a component of the light of the first wavelength and the second image having a component of the light of the second wavelength by processing the image captured by the camera.

8. The inspection method of claim 6, wherein the camera comprises a first sensor detecting the light of the first wavelength and a second sensor detecting the light of the second wavelength, and
the image acquisition step is performed by acquiring the first image from the first sensor and the second image from the second sensor.

9. The inspection method of claim 6, wherein the determination step comprises a tab defectiveness determination step for determining whether the plurality of electrode tabs are misaligned.

10. The inspection method of claim 9, wherein the tab defectiveness determination step is performed by detecting a width of the plurality of electrode tabs in stacked state from at least one of the first image and the second image, and determining the plurality of electrode tabs as non-defective when the width is less than or equal to a predetermined value, and as defective when the width is greater than the predetermined value.

11. The inspection method of claim 9, wherein the tab defectiveness determination step comprises:
a first determination step of analyzing the first image to determine whether the plurality of electrode tabs are misaligned; and
a second determination step of analyzing the second image to determine whether the plurality of electrode tabs are misaligned.

12. The inspection method of claim 11, wherein the second determination step is performed after the first determination step when the plurality of electrode tabs are determined as defective in the first determination step.

13. The inspection method of claim 11, wherein the first determination step is performed the after the second determination step when the plurality of electrode tabs are determined as defective in the second determination step.

14. The inspection method of claim 11, wherein the tab defectiveness determination step further comprises: a third determination step of finally determining the plurality of electrode tabs as non-defective when the plurality of electrode tabs is determined as non-defective in at least one of the first determination step and the second determination step.

15. The inspection method of claim 9, wherein the determination step further comprises a separator defectiveness determination step of analyzing the second image to determine whether the electrode laminate is defective caused by damage to the separator.

16. The inspection method of claim 11, wherein the determination step further comprises a separator defectiveness determination step of analyzing the second image to determine whether the electrode laminate is defective caused by damage to the separator, the separator defectiveness determination step being performed together with the second determination step.
